# EUROPÄISCHE PATENTSCHRIFT

(11) **EP 0 615 912 B1**
(45) Veröffentlichungstag und Bekanntmachung des Hinweises auf die Patenterteilung: **03.12.1997**
(21) Anmeldenummer: 93104295.6
(22) Anmeldetag: 16.03.1993
(51) Int. Cl.: B65D 5/44, B65D 5/42

(54) **Transport- und Verpackungsbehältnis**
Transport and packaging container
Récipient de transport et d'emballage

(43) Veröffentlichungstag der Anmeldung: 21.09.1994
(73) Patentinhaber: Kerner, Franz Dr.-Ing., D-70469 Stuttgart (DE); Pfeffer, Wolfram, 71063 Sindelfingen (DE)
(72) Erfinder: Kerner, Franz Dr.-Ing., D-70469 Stuttgart (DE); Pfeffer, Wolfram, 71063 Sindelfingen (DE)
(74) Vertreter: Kohl, Karl-Heinz

(56) Entgegenhaltungen:
- EP-A- 0 155 182
- FR-A- 1 428 321
- FR-A- 2 498 563
- FR-A- 2 610 292
- GB-A- 625 057
- GB-A- 899 427
- US-A- 2 311 857
- US-A- 3 377 090
- US-A- 4 210 274
- US-A- 4 807 808

## Beschreibung

Die Erfindung betrifft ein Transport- und Verpackungsbehältnis nach dem Oberbegriff des Anspruches 1.

Es sind aus Karton bestehende Behältnisse bekannt, die einen Grundkörper aufweisen, mit dem der Deckel verbunden ist. Grundkörper und Deckel können durch vorhandene Biegekanten relativ flach zusammengelegt werden. Es sind auch Kunststoff-Behältnisse bekannt, die aus einem Boden und mit diesem gelenkig verbundenen Seitenwänden bestehen, die über Rastglieder an den Vertikalkanten miteinander verbindbar sind.

Beim gattungsgemäßen Behältnis (US-A-4 210 274) sind die Innenschenkel der Kantenverbinder an den freien Enden rechtwinklig in Richtung auf die Außenschenkel zur Bildung des Profilteiles abgewinkelt. Mit diesem Schenkel greifen die Kantenverbinder in Vertiefungen am Rand der Seitenwände des Behältnisses formschlüssg ein. Die Dicke der Seitenwände entspricht dem Abstand der Innen- und Außenschenkel der Kantenverbinder voneinander. Um einen sicheren Sitz der Kantenverbinder auf den Rändern der Seitenwände zu gewährleisten, müssen die Kantenverbinder aus diesem Grunde genau im Hinblick auf die Dicke der Ränder der Seitenwände gefertigt werden. Beim Aufschieben bzw. Abziehen der Kantenverbinder können die scharfkantigen Profilteile der Innenschenkel die Seitenwand beschädigen.

Bei einem anderen bekannten Behältnis (FR-A1-1 428 321) sind der Boden und die Seitenwände durch zwei bodenseitig miteinander verbundene Grundkörperteile gebildet. Benachbarte Seitenwände sind über die Kantenverbinder miteinander verbunden, die die Außen- und Innenschenkel und diese verbindende Querstege aufweisen. Die Innenschenkel sind durch die Dreieckseiten eines im Querschnitt dreieckförmigen Innenteiles gebildet. Die Innen- und Außenschenkel begrenzen Stecköffnungen, in welche die miteinander zu verbindenden Seitenwände mit ihren Rändern ragen. Zur Lagesicherung auf den Seitenwänden weisen die Außen- und Innenschenkel der Kantenverbinder an ihren Innenseiten V-förmig zueinander verlaufende, spitz zulaufende Vorsprünge auf. Die Kantenverbinder sind infolge ihres Innenteiles und der Vorsprünge an den Schenkeln aufwendig und teuer in der Herstellung. Außerdem besteht bei der Montage der Kantenverbinder die Gefahr, daß die Seitenwände durch die spitz zulaufenden Vorsprünge beschädigt werden. Insbesondere bei häufiger Montage und Demontage der Kantenverbinder kann es leicht zu einer Beschädigung der Seitenwände kommen.

Es ist auch ein Behältnis bekannt (US-A-4 807 808), das aus einem Bodenteil mit einem umlaufenden Rand, Seitenwänden und diese verbindenden Kantenverbindern sowie einem Deckel besteht. Die Kantenverbinder haben Außen- und Innenschenkel, die über Querstege miteinander verbunden sind und eine Einschuböffnung für die miteinander zu verbindenden Seitenwände begrenzen. Bei der Montage des Behältnisses besteht die Gefahr, daß die auf die Seitenwände zu steckenden Kantenverbinder nicht einwandfrei gegenüber den zu verbindenden Seitenwänden ausgerichtet sind und sich gegenüber ihnen verkanten. Die Kantenverbinder sind auf den Wänden auch nicht gegen Querverschieben einwandfrei gesichert, so daß sie sich gegenüber den Seitenwänden bei starker Beanspruchung des Behältnisses verschieben können.

Schließlich ist auch ein Behältnis bekannt (EP-A3-0 155 182), bei dem die Seitenwände durch Kantenverbinder zusammengehalten werden. Sie bestehen aus mehreren Einzelteilen, einem Außenteil mit Außenschenkeln, einem als Profilteil ausgebildeten Innenteil und Sicherungsteilen zum Verbinden des Außen- und Innenteiles. Diese Teile werden zum Verbinden der Seitenwände gesondert an sie angelegt bzw. gegenüber den Seitenwänden ausgerichtet und dann über die in Öffnungen des Innenteiles zu steckenden Sicherungsteile gegeneinander und mit den Seitenwänden verschraubt. Die Herstellung des Behältnisses ist infolge der komplizierten Ausbildung des Kantenverbinders aufwendig und teuer. Auch die Montage der Kantenverbinder ist äußerst zeitaufwendig und erfordert Geduld und Geschicklichkeit. Es besteht die Gefahr, daß sich die Sicherungsteile beim Einsatz des Behältnisses lösen. Zum Transport von Gütern und zum anschließenden Aufbewahren des Behältnisses in zusammengefaltetem Zustand ist das Behältnis nicht geeignet.

Der Erfindung liegt die Aufgabe zugrunde, das gattungsgemäße Transport- und Verpackungsbehältnis so auszubilden, daß die Kantenverbinder bei konstruktiv einfacher Ausbildung einfach und schnell und ohne die Gefahr einer Beschädigung der Seitenwände montiert werden können.

Diese Aufgabe wird beim gattungsgemäßen Transport- und Verpackungsbehältnis erfindungsgemäß mit den kennzeichnenden Merkmalen des Anspruches 1 gelöst.

Beim erfindugsgemäßen Transport- und Verpackungsbehältnis sitzen die Kantenverbinder und elastischer Vorspannung auf den Seitenwänden. Dadurch ist eine sichere Verbindung zwischen den Kantenverbindern und den Seitenwänden gewährleistet. Aufgrund der elastischen Verformung müssen die Kantenverbinder nicht mehr mit hoher Fertigungsgenauigkeit hergestellt werden. Auch wenn der Abstand der Innen- und Außenschenkel voneinander geringfügig variiert, ist durch die elastische Verformung in montiertem Zustand sichergestellt, daß die Kantenverbinder zuverlässig fest auf den Seitenwänden sitzen. Da der Profilteil und die Vertiefung der Seitenwände mit gekrümmten Flächen aneinanderliegen, ist beim Aufschieben bzw. beim Abziehen der Kantenverbinder gewährleistet, daß selbst bei höherer elastischer Vorspannung die Seitenwände nicht beschädigt werden. Dabei sind die Kantenverbinder konstruktiv einfach ausgebildet, was sich vorteilhaft auf die Herstellungskosten des Behältnisses auswirkt. Infolge der einwandfreien, sicheren Montage der Kantenverbinder auf den Seitenwänden eignet sich das erfindungsgemäße Behältnis besonders für wechselnde Einsätze, bei denen das Behältnis durch Abnehmen der Kantenverbinder auf kleinstem Raum zusammengelegt bzw. anschließend durch Aufrichten der Seitenwände und Aufstecken der Kantenverbinder für Transportfälle eingesetzt werden kann. Wenn das Behältnis nicht benötigt wird und klein zusammegelegt werden soll, werden die Kantenverbinder von den Seitenwänden abgenommen, die flach auf den Behälterboden gelegt und mit ihm sowie mit den Kantenverbindern beispielsweise im Deckel untergebracht werden können. Das so auf ein minimales Volumen zusammengelegte Behältnis kann jederzeit vom Endverbraucher beispielsweise dem Händler zurückgegeben werden. Vorteilhaft bekommt der Endverbraucher dann eine zuvor entrichtete Leih- bzw. Pfandgebühr vom Händler zurück. Er kann das Behältnis auf kleinstem Raum kostengünstig lagern.

Da in der Gebrauchs- und in der Aufbewahrungslage die Kanten des Behältnisses in hohem Maße vor Beschädigungen durch die Kantenverbinder und durch Aufbewahren des Grundkörpers im Deckel geschützt sind, hat das Behältnis eine hohe Lebensdauer und eignet sich hervorragend als Mehrwegpackung. Das erfindugsgemäße Behältnis ist ferner für Abfallvermeidungskonzepte hervorragend geeignet. Ein Händler kann das Behältnis einfach und schnell wieder verwenden. Nach langer Einsatzdauer kann es gegebenenfalls auch einem Recycling-Verfahren zugeführt werden. Das Behältnis kann beispielsweise aus Karton, Metall, vorzugsweise Aluminium, oder Kunststoff einfach und kostengünstig hergestellt werden. Es können aber auch beispielsweise nur die Kantenverbinder aus Metall oder Kunststoff bestehen, während das übrige Behältnis aus Karton gefertigt wird. Vorteilhaft sind die Kantenverbinder so ausgebildet, daß sie für eine Vielzahl verschiedener Verpackungsgrundkörper eingesetzt werden können.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele beschrieben.

Es zeigt:
- Fig. 1: ein erfindungsgemäßes Transport- und Verpackungsbehältnis in perspektivischer Darstellung,
- Fig. 2: zwei den Boden und die Seitenwände des Behältnisses nach Fig. 1 bildende Grundkörperteile in flach ausgelegtem Zustand,
- Fig. 3: das Behältnis nach Fig. 1 in einem Schnitt längs der Linie III-III in Fig. 1,
- Fig. 4: das Behältnis nach Fig. 1 in zehn verschiedenen Stadien während des Zusammenlegens aus der Gebrauchs- in eine Aufbewahrungslage,
- Fig. 5: das Behältnis nach Fig. 1 in neun verschiedenen Schritten beim Überführen aus der Aufbewahrungslage in die Gebrauchslage,
- Fig. 6: eine weitere Ausführungsform eines erfindungsgemäßen Behältnisses in einer Darstellung entsprechend Fig. 3,
- Fig. 7: das Behältnis nach Fig. 6 in Unteransicht gemäß Pfeil VII in Fig. 6,
- Fig. 8: einen Grundkörper mit Kantenprofilstücken des Behältnisses nach Fig. 6 in schematischer Darstellung, wobei in drei verschiedenen Abbildungen die Anordnung eines Eckschutzes im Bodenbereich dargestellt ist,
- Fig. 9 und 10: jeweils eine weitere Ausführungsform eines erfindungsgemäßen Behältnisses in einer Darstellung entsprechend Fig. 3,
- Fig. 11 bis 16: jeweils eine andere Ausführungsform eines Kantenverbinders eines erfindungsgemäßen Behältnisses, das an zwei aneinanderstoßenden Seitenwänden befestigt ist,
- Fig. 17: ein weiteres erfindungsgemäßes Behältnis in einer Darstellung entsprechend Fig. 3, bei dem der Grundkörper mit einem Deckel über Halter verbunden ist,
- Fig. 18: eine Draufsicht auf das Behältnis nach Fig. 17,
- Fig. 19: das Behältnis nach Fig. 17 in schematischer Darstellung und in sieben verschiedenen Stufen beim Aufrichten aus einer zusammengeklappten Aufbewahrungslage in eine Gebrauchslage,
- Fig. 20: in vergrößerter Darstellung einen Teil des Behältnisses nach Fig. 17 mit einer weiteren Ausführungsform eines Halters,
- Fig. 21: den Deckel nach Fig. 1 in perspektivischer Darstellung,
- Fig. 22: den Deckel nach Fig. 21 mit Schutzteilen für die Deckelecken,
- Fig. 23: den Deckel nach Fig. 21 mit Kantenschutzteil,
- Fig. 24: den Deckel nach Fig. 21 mit einem Kanten- und Eckschutz.

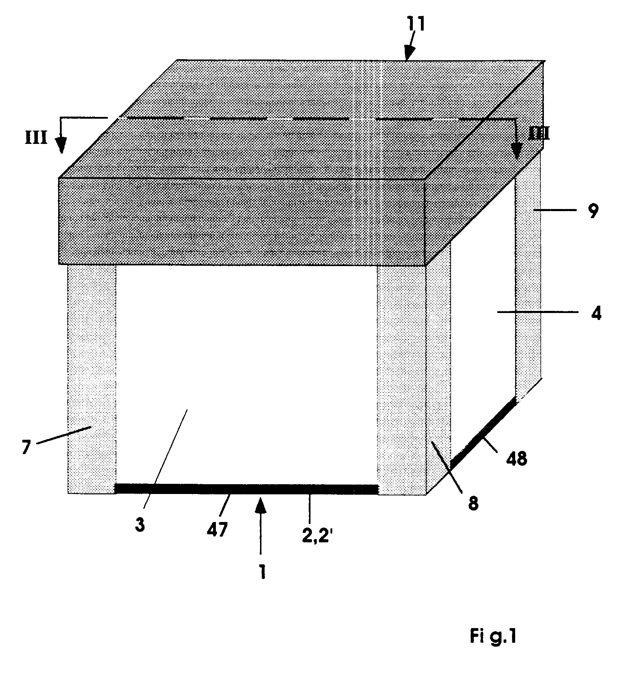

Das Behältnis gemäß Fig. 1 dient zum Verpacken und zum Transport von darin untergebrachten Gütern. Vorzugsweise ist das Behältnis ein Karton. Es kann aber auch aus Kunststoff, Metall, vorzugsweise Aluminium, oder einer Kombination dieser Materialien bestehen. Auf jeden Fall hat das Behältnis eine hohe Formstabilität und ein geringes Gewicht und besteht vorzugsweise aus recyclebarem und abwaschbarem Material.

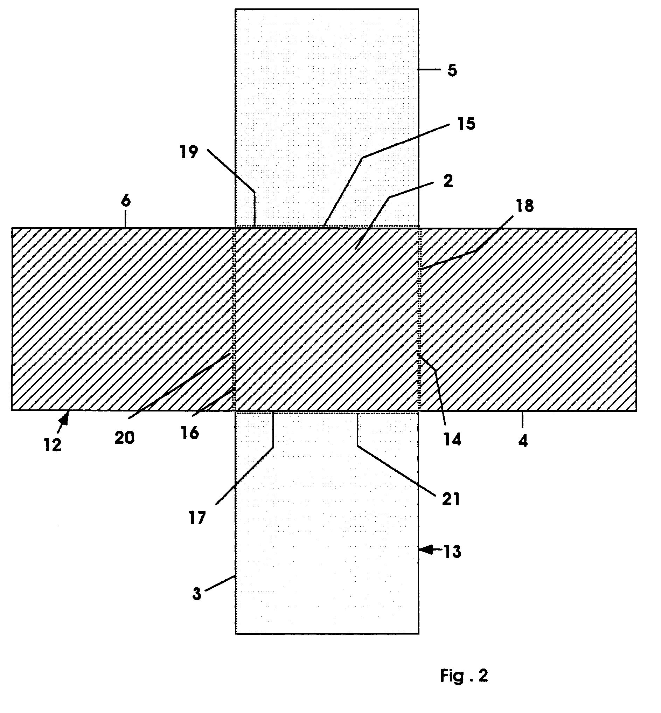

Das Behältnis besteht aus einem Grundkörper 1, der einen doppellagigen Boden 2, 2', Seitenwände 3 bis 6 und Kantenverbinder 7 bis 10 hat, sowie aus einem auf den Grundkörper aufgesetzten Deckel 11. Wie Fig. 2 zeigt, sind der Boden 2, 2' und die Seitenwände 3 bis 6 durch zwei gleiche rechteckige Grundkörperteile 12 und 13 gebildet, die vor dem Aufrichten der Seitenwände, also bei der Herstellung des Grundkörpers, symmetrisch und kreuzförmig aufeinander gelegt werden, so daß ein fünfflächiger Grundkörper gebildet ist. Der Boden ist durch die einander überlappenden, im Ausführungsbeispiel quadratischen Mittelflächen 2 und 2' der Grundkörperteile 12 und 13 gebildet.

Wie Fig. 2 weiter zeigt, weisen die Seitenwände 3 bis 6 unmittelbar benachbart zu den Rändern 14 bis 17 des Bodens 2, 2' liegende Verschwächungen 18 bis 21 auf, die vorzugsweise durch Stanzungen oder Perforationen gebildet sind. Sie erstrecken sich über die ganze Länge der Bodenränder und bilden Biegekanten, um die die Seitenwände zum Aufrichten nach oben bzw., wie noch erläutert wird, beim Zusammenlegen des Behältnisses auch nach unten geklappt werden können. Die Bodenflächen 2 und 2' sind miteinander vorzugsweise verklebt.

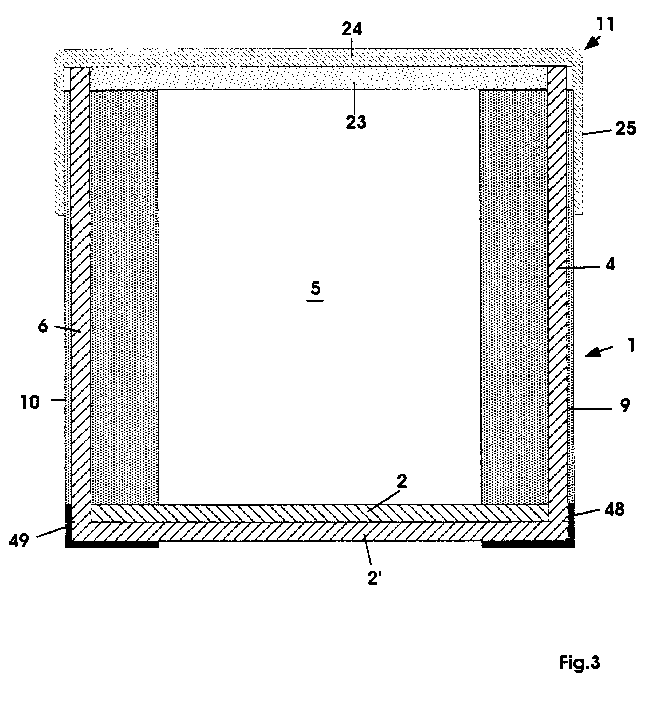

Wie Fig. 1 weiter zeigt, sitzt der Deckel 11 bei geschlossenem Behältnis auf den Seitenwänden 3 bis 6 auf. Er hat vorteilhaft an seiner Innenseite 22 eine Versteifungsplatte 23 (Fig. 3), die etwa gleiche Dicke wie der Deckelboden 24 hat und sich bis an die Seitenwände 3 bis 6 erstreckt. Der Deckelrand 25 reicht im Ausführungsbeispiel gemäß Fig. 3 bis über etwa das obere Behälterdrittel. Die Versteifungsplatte 23 hat allseitigen Abstand vom Deckelrand 25, der senkrecht zum Deckel verläuft und an der Außenseite der Seitenwände 3 bis 6 liegt.

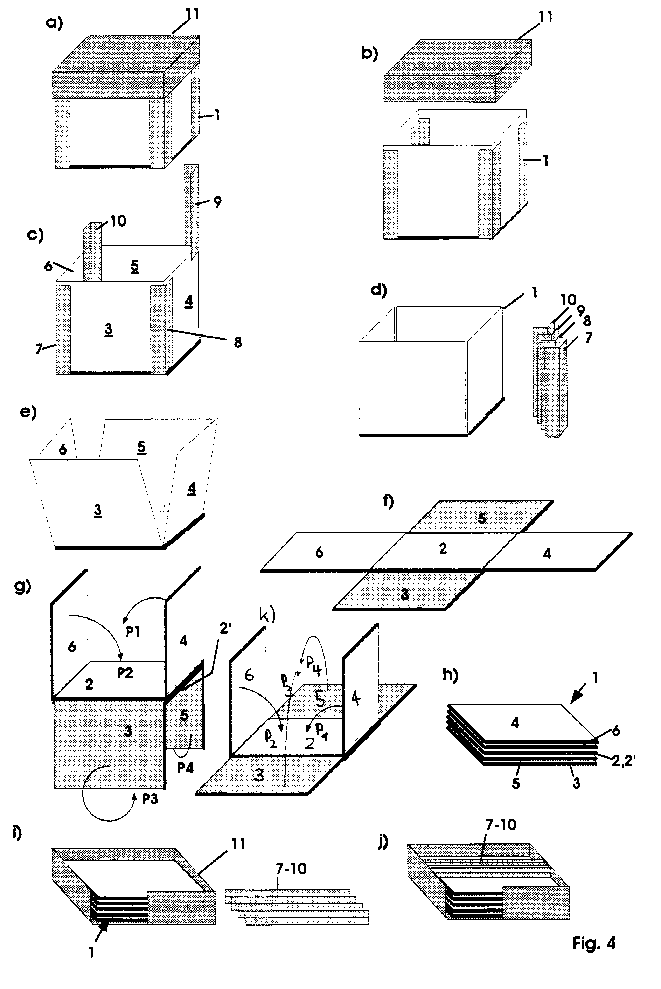

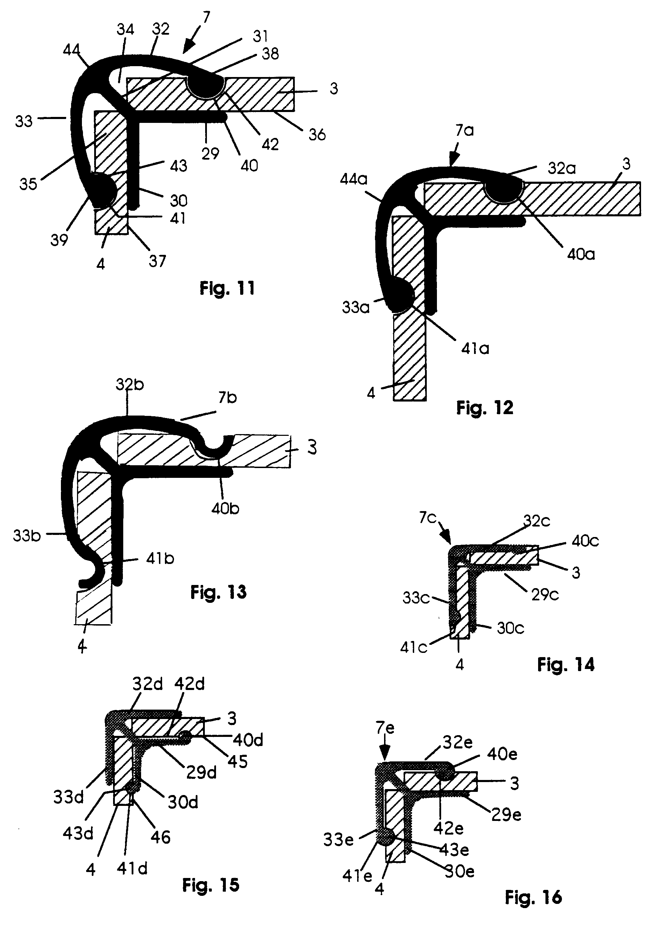

Um die Seitenwände 3 bis 6 an ihren vertikalen Kanten miteinander zu verbinden, sind die Kantenverbinder 7 bis 10 vorgesehen. Sie werden, wie noch im einzelnen erläutert wird, auf die miteinander zu verbindenden Seitenwände 3, 4; 4, 5; 5, 6; 6, 3 von oben aufgesteckt, was in Fig. 4 schematisch dargestellt ist. Hierzu weisen die Kantenverbinder 7 bis 10 jeweils Steckprofilteile auf, wie nachfolgend anhand der in den Fig. 11 bis 16 dargestellten Profilausbildungen noch beschrieben werden wird.

Die Kantenverbinder erstrecken sich, wie Fig. 3 zeigt, von der oberen Bodenfläche 2 aus bis in den Bereich dicht unterhalb der Versteifungsplatte 23 und enden mit Abstand von der Stirnseite der Seitenwände 3 bis 6, auf der der Deckel 11 liegt. Der Deckelrand 25 umgreift die Kantenverbinder.

Fig. 11 zeigt ein erstes Ausführungsbeispiel eines zur Verbindung der Seitenwände 3 bis 6 des Behältnisses geeigneten Kantenverbinders 7. Er weist zwei rechtwinklig zueinander verlaufende Innenschenkel 29, 30 auf, die über einen Quersteg 31 mit zwei Außenschenkeln 32 und 33 verbunden sind. Die einander gegenüberliegenden Innen- und Außenschenkel 29, 32 bzw. 30, 33 bilden Steckprofilöffnungen 34 und 35, in die die Seitenwände 3 bzw. 4 mit ihren vertikal verlaufenden Rändern eingreifen. Mit den Innenschenkeln 29, 30 liegt der Kantenverbinder 7 an den Innenseiten 36, 37 der Seitenwände 3, 4 ganzflächig an, während die Außenschenkel 32, 33 die Seitenwände 3, 4 mit Abstand umgreifen. Zur Lagesicherung und Führung des Kantenverbinders 7 beim Aufsetzen auf die miteinander zu verbindenden Seitenwände 3, 4 weisen die Außenschenkel 32, 33 an ihren freien Enden bzw. Längsrändern 38, 39 nach innen in Richtung auf die Innenschenkel 29, 30 verlaufende wulstartige Verdickungen 40, 41 auf, die in entsprechende Vertiefungen 42, 43 der Seitenwände 3, 4 ragen. Sofern als Werkstoff für die Seitenwände 3, 4 Karton vorgesehen ist, werden die Vertiefungen dadurch hergestellt, daß die Seitenwände über ihre gesamte Höhe parallel zu ihren freien Längsrändern eingedrückt werden. Wie Fig. 11 weiter zeigt, verlaufen die Außenschenkel 32, 33 mit großem spitzen Winkel zueinander und in Richtung auf die Innenschenkel 29, 30. Die Außenschenkel 32, 33 sind leicht konvex nach außen gebogen und gehen über einen abgerundeten Kantenbereich ineinander über. Die Schenkelwulste 40, 41 erstrecken sich vorzugsweise über die ganze Höhe der Außenschenkel und haben etwa halbkreisförmigen Querschnitt. Entsprechend sind die Vertiefungen 42, 43 etwa halbkreisförmig abgerundet. Im Bereich der Schenkelwulste 40, 41 haben die Außenschenkel 32, 33 von den Innenschenkeln 29, 30 einen relativ kleinen Abstand, der im Ausführungsbeispiel kleiner ist als die halbe Dicke der Seitenwände 3, 4. Die freien Enden der Außen- und Innenschenkel 29, 30 und 32, 33 liegen etwa in gleicher Höhe. Der Abstand zwischen den Schenkelwulsten 40, 41 und den Innenschenkeln 29, 30 ist vorteilhaft etwas kleiner als die Dicke der Seitenwände 3 bis 6, zumindest im Bereich der Vertiefungen 42, 43. Dadurch werden die Außenschenkel 32, 33 beim Aufstecken auf die Seitenwände 3 bis 6 elastisch gebogen, so daß sie mit entsprechender Vorspannung an den Seitenwänden anliegen. Dadurch sind die Kantenverbinder 7 sicher in ihrer Einbaulage gehalten. Der unter 135° zu den Innenschenkeln 29, 30 nach außen verlaufende Quersteg 31 verleiht dem Kantenverbinder eine hohe Festigkeit. Da die Schenkelwulste 40, 41 im Querschnitt eine teilkreisförmig verlaufende Außenseite haben, werden die Seitenwände 3 bis 6 beim Aufstecken der Kantenverbinder 7 nicht beschädigt.

Der Kantenverbinder 7a gemäß Fig. 12 unterscheidet sich vom Kantenverbinder 7 im wesentlichen nur dadurch, daß die Außenschenkel 32a, 33a unter einem größeren spitzen Winkel zueinander verlaufen, so daß der Kantenbereich 44a stärker gekrümmt ist als der Kantenbereich 44 des Kantenverbinders 7. Dadurch liegen die Außenschenkel 32a, 33a näher an den Seitenwänden 3, 4. Im übrigen ist dieses Ausführungsbeispiel gleich ausgebildet wie die vorige Ausführungsform.

Der Kantenverbinder 7b gemäß Fig. 13 unterscheidet sich vom Kantenverbinder 7a gemäß Fig. 12 nur dadurch, daß anstelle der Wulste 40a, 41a hakenförmig nach außen gekrümmte Enden 40b, 41b vorgesehen sind, die konvex gekrümmt verlaufen. Diese Ausbildung der Enden ist konstruktiv einfach und hat den Vorteil, daß dadurch der Kantenverbinder relativ leicht ist und die Außenschenkel 32b, 33b im Endbereich eine hohe Elastizität haben.

Bei den Ausführungsformen nach den Fig. 14 bis 17 sind die Außenschenkel 32c, 33c; 32d, 33d; 32e, 33e wie die Innenschenkel 29c, 30c; 29d, 30d; 29e, 30e eben ausgebildet und verlaufen parallel zu diesen. Der Abstand der Außenschenkel von den Innenschenkeln ist nur geringfügig kleiner als die Dicke der Seitenwände 3 bis 6, so daß die Kantenverbinder klemmend gehalten sind.

Beim Kantenverbinder 7c gemäß Fig. 14 weisen die Außenschenkel 32c, 33c wie bei der Ausführungsform nach Fig. 11 endseitige Wulste 40c, 41c auf, mit denen sie in die entsprechenden Vertiefungen in den Seitenwänden 3 bis 6 ragen. Die Außenschenkel 32c, 33c liegen wie die Innenschenkel 29c, 30c an den Seitenwänden 3 bis 6 flach an. Die Innenschenkel 29c, 30c sind im dargestellten Ausführungsbeispiel geringfügig länger als die Außenschenkel 32c, 33c.

Bei der Ausführungsform nach Fig. 15 weisen die Innenschenkel 29d, 30d an ihren freien Enden die Wulste 40d, 41d auf, die entsprechend ausgebildet sind wie die Wulste 40c, 41c des Kantenverbinders 7c (Fig. 14). Zur Aufnahme der Wulste 40d, 41d weisen die Seitenwände 3 bis 6 an ihren Innenseiten 45, 46 den Wulsten 40c, 41c entsprechende Vertiefungen 42d, 43d auf. Die Innenschenkel 29d, 30d liegen vorteilhaft mit geringem Abstand von den Seitenwänden 3 bis 6. Bei dieser Ausführungsform werden die Innenschenkel 29d, 30d vorteilhaft elastisch verformt, so daß die Kantenverbinder 7d fest auf den Seitenwänden 3 bis 6 sitzen.

Der Kantenverbinder gemäß Fig. 16 entspricht im wesentlichen dem zuvor beschriebenen Kantenverbinder. Er unterscheidet sich von ihm lediglich dadurch, daß die Außenschenkel 32e, 33e mit geringem Abstand von den Seitenwänden 3 bis 6 liegen und die Wulste 40e, 41e aufweisen. Entsprechend sind die Seitenwände 3 bis 6 an der Außenseite mit den Vertiefungen 42e, 43e versehen.

Durch die Kantenverbinder ist es möglich, den Grundkörper 1 auf kleinstem Raum zusammenzulegen und ihn zusammen mit den Kantenverbindern im Deckel 11 unterzubringen. Hierzu werden zunächst eventuell um das Behältnis gemäß Fig. 4a geschlungene Bänder entfernt, die den Grundkörper 1 und den Deckel 11 zusammenhalten. Danach wird der Deckel 11 nach oben vom Grundkörper 1 abgenommen (Fig. 1b). Dann werden nacheinander die einzelnen Kantenverbinder 7 bis 10 nach oben von den Seitenwänden 3 bis 6 des Grundkörpers 1 abgezogen (Fig. 4c) und gemäß Fig. 4d neben dem Grundkörper 1 hintereinander angeordnet. Dann werden die Seitenwände 3 bis 6 nach unten geklappt (Fig. 4e) und entsprechend Fig. 4f flach auf dem Boden ausgelegt. Nun kann das (nicht dargestellte) und im Behältnis untergebrachte Gut bequem entnommen werden. Beim Herunterklappen schwenken die Seitenwände 3 bis 6 um ihre Biegekanten 18 bis 21. Danach werden gemäß Fig. 4g die Seitenwände 4, 6 wieder nach oben um ihre Biegekanten 18 und 20 geschwenkt (Pfeil P1 und P2), während die Seitenwände 3,5 um ihre Biegekanten 19 und 21 nach unten in Richtung der Pfeile P3 und P4 geschwenkt werden. Die Wände 4, 6 werden so weit nach unten geklappt, bis sie auf dem Boden 2 aufliegen, während die Seitenwände 3, 4 so weit nach unten geschwenkt werden, bis sie auf der unteren Bodenfläche 2' aufliegen (Fig. 4h). Die Seitenwände 3 bis 6 können aber auch in herkömmlicher Weise so gefaltet werden (Fig. 4 k), daß zunächst die Wände 4 und 6 und danach die Wände 3 und 5 auf den Bodenteil 2 gefaltet werden (Pfeil P1 bis P4). Der so gefaltete Grundkörper 1 wird dann (Fig. 4i) in den Deckel 11 gelegt. Anschließend werden auf den Grundkörper 1 die Kantenverbinder 7 bis 10 gelegt, so daß sie zusammen mit dem Grundkörper im Deckel 11 untergebracht sind. Das Behältnis nimmt somit einen kleinstmöglichen Raum ein und kann nunmehr auf einfache Weise vom Endverbraucher an den Händler zurückgebracht werden. Dort erhält der Endverbraucher eine zuvor dem Händler bezahlte Pfandgebühr für das Behältnis zurück. Das Verpackungs- und Transportbehältnis eignet sich infolge seiner Volumenverringerung als Mehrwegverpackung, die viele Male wieder verwendet werden kann. Mit dem beschriebenen, klein zusammenlegbaren und im Deckel 11 unterzubringenden Grundkörper 1 gewährleistet das beschriebene Behältnis, daß es auf einfache Weise einen erheblichen Anteil an Verpackungsmüll einspart. Nach Rückgabe des Behältnisses wird es vom Händler auf Lager gehalten, bis es wiederverwendet werden kann. Die Verpackung nimmt hierbei nur einen Bruchteil des in seiner Gebrauchslage erforderlichen Lagerraumes ein, so daß der Händler problemlos viele solcher Behältnisse auf kleinstem Raum unterbringen kann.

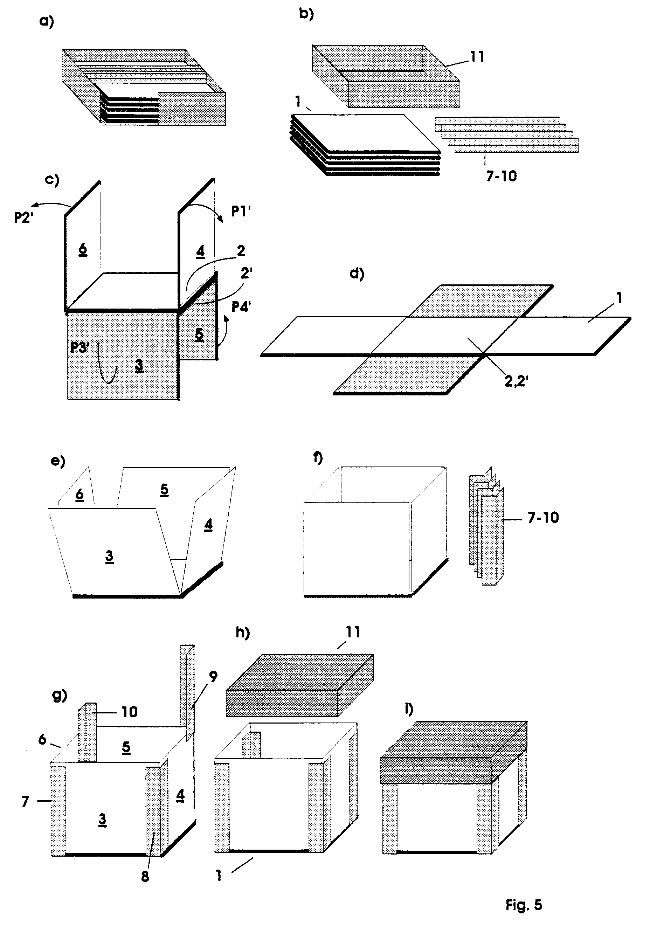

Sofern das Behältnis zur Verpackung und zum Transport eines Gutes wiederverwendet werden soll, kann es einfach aus der zusammengelegten Aufbewahrungslage in seine Gebrauchslage überführt werden. In der Aufbewahrungslage gemäß Fig. 5a werden der zusammengefaltete Grundkörper 1 und die Kantenverbinder 7 bis 10 dem Deckel 11 entnommen und neben ihm abgelegt. Danach werden gemäß Fig. 5c die Wände 3 und 5 vom Boden 2' in Richtung der Pfeile P3' und P4' nach außen geklappt und anschließend oder zuvor die Wände 4, 6 vom Boden 2 in Richtung der Pfeile P2' und P1' weggeklappt. Dann werden die Wände 3 bis 6 so weit in Richtung der Pfeile P1' bis P4' verschwenkt, bis der Grundkörper 1 die in Fig. 5d dargestellte flache Lage einnimmt. Nun kann das Gut auf dem Boden 2, 2' abgestellt werden. Anschließend werden gemäß Fig. 5e die Seitenwände 3 bis 6 nach oben geklappt (Fig. 5f) und die Kantenverbinder 7 bis 10 nacheinander von oben auf die miteinander zu verbindenden Seitenwände 3 bis 6 gesteckt (Fig. 5g). Es muß danach der Deckel 11 (5h) auf den Grundkörper 1 aufgesetzt werden (Fig. 5i). Dann kann das Behältnis mit dem dort untergebrachten Gut beispielsweise mit Bändern gesichert werden.

Insbesondere die Fig. 1 und 3 zeigen, daß die Bodenkanten im Bereich zwischen den Kantenverbindern 7 bis 10 durch Schutzleisten 47 bis 49 vor Beschädigung geschützt sind. Sie bestehen vorzugsweise aus im Querschnitt L-förmigen Schienen, die auf die Bodenkanten aufgeklebt oder auf ähnliche Weise befestigt werden. Sie gewährleisten einen hohen Schutz im Bodenbereich des Behältnisses, wodurch es auch bei starker Beanspruchung vor Beschädigung geschützt ist. Vorzugsweise liegen die längeren Schenkel der Schutzleisten 47 bis 49 an der Unterseite des Bodenteiles 2' an, während der kürzere Schenkel an der Außenseite der Seitenwände 3 bis 6 anliegt. Damit die Seitenwände 3 bis 6 in der beschriebenen Weise weggeklappt werden können, sind die Schutzleisten 47 bis 49 jeweils mit einer zwischen ihren Schenkeln verlaufenden Biegekante versehen. Die Schutzleisten 47 bis 49 sind zudem verhältnismäßig dünn ausgebildet, so daß sie in der Aufbewahrungslage nur wenig auftragen.

Wie bereits erwähnt, können der Grundkörper 1 und der Deckel 11 aus Karton, Aluminium, Kunststoff oder anderen formstabilen, recyclebaren und vorzugsweise abwaschbaren Materialien hergestellt sein. Die Kantenverbinder 7 bis 10 bestehen vorzugsweise aus Kunststoff; sie können aber auch aus Metall, beispielsweise aus Aluminium, hergestellt sein. Das Behältnis ist kostengünstig in der Herstellung und nicht nennenswert teurer als Einwegverpackungsbehältnisse. Das Volumen des Behältnisses ist in der Aufbewahrungslage nur sehr klein. Außerdem hat das Behältnis ein geringes Gewicht. Durch leichte Faltbarkeit kann das Behältnis einfach und schnell aus der Gebrauchslage in die Aufbewahrungslage und umgekehrt überführt werden.

Die Kantenverbinder 7 bis 10 sind so ausgebildet, daß sie unabhängig vom Verpackungsgrundkörper 1 und dessen Form sowie seiner Materialstärke verwendet werden können. Sie können also auch für Grundkörper mit unterschiedlicher Wandstärke und unterschiedlichem Material eingesetzt werden. Dies wirkt sich vorteilhaft auf die Herstellungs- und Lagerhaltungskosten aus.

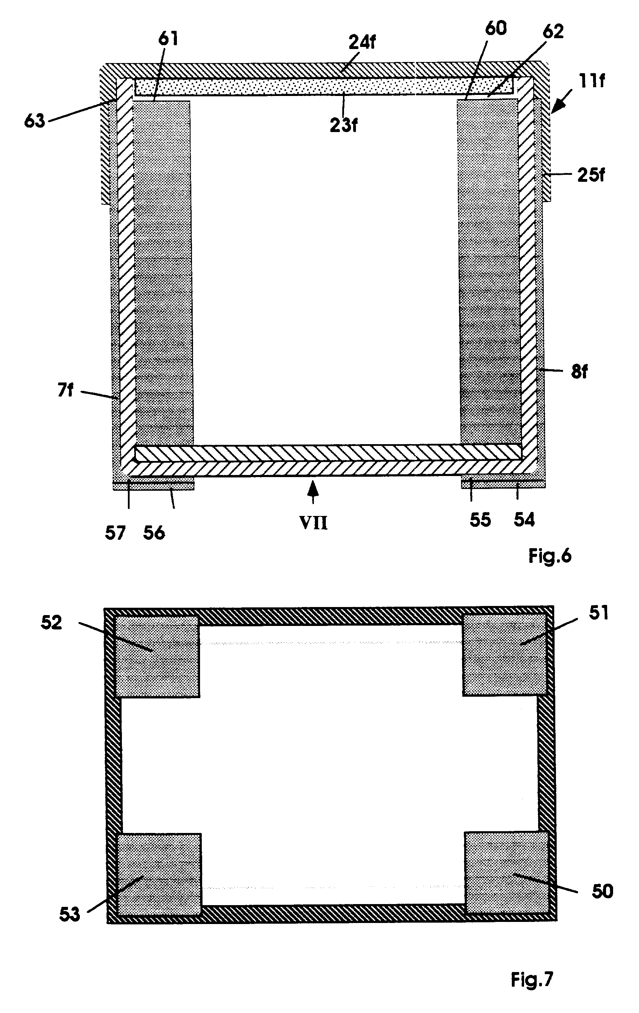

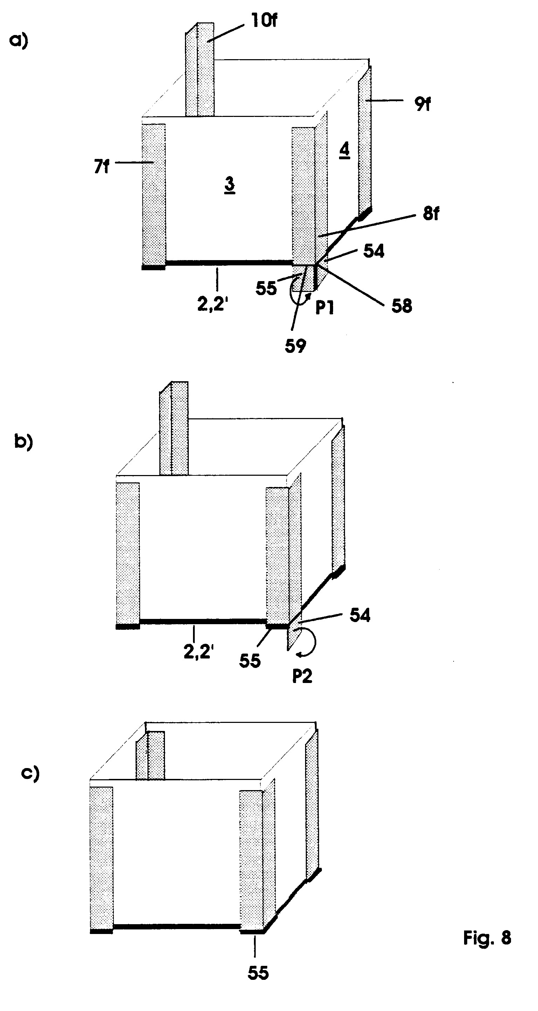

Das Behältnis gemäß den Figuren 6 und 7 ist im wesentlichen gleich ausgebildet wie das Behältnis nach den Figuren 1 bis 3. Ein wesentlicher Unterschied besteht darin, daß die Kantenverbinder 7f bis 10f einen Eckschutz 50 bis 53 für die Bodenecken bilden. Hierzu weisen die Kantenverbinder an ihren Außenschenkeln Verlängerungen 54, 55 bzw. 56, 57 (Fig. 6 und 8a) auf. Vorzugsweise werden als Kantenverbinder für den Eckschutz 50 bis 53 Profilstücke gemäß Fig. 15 verwendet. Es können aber auch die Kantenverbinder gemäß den Fig. 14 bis 16 vorgesehen sein, wenn die dort vorhandenen Verdickungen 40c, 41c bzw. 40e, 41e entfallen.

Die Verlängerungen 54 bis 57 sind einteilig mit den Außenschenkeln ausgebildet und lediglich durch eine Biegekante 58, 59, wie eine Prägung, Perforation oder dergleichen, von diesen abgesetzt, so daß die laschenartigen Verlängerungen nun um diese Biegekanten nach unten in Richtung auf den Boden umgeklappt werden können (Fig. 6). Fig. 8 zeigt in schematischer Weise anhand des Kantenverbinders 8f, wie dessen laschenartige Verlängerungen 54, 55 nach der Montage des Kantenverbinders zum Schutz der zugehörigen Bodenecken auf dem Boden 2, 2' umgeklappt werden. Hierzu wird zunächst der Kantenverbinder 8f in die in Fig. 8a dargestellte Position zu den Seitenwänden 3, 4 gebracht. Der Kantenverbinder wird so weit nach unten auf den Wänden 3, 4 geschoben, bis die Biegekanten 58, 59 unterhalb des Bodens liegen. In dieser Stellung ragen die Verlängerungen 54, 55 nach unten über den Boden 2, 2'. Dadurch wird gemäß Fig. 8b die eine Verlängerungslasche 55 in Richtung des Pfeiles P1 (Fig. 8a) auf den Boden 2, 2' umgeklappt. Dann wird gemäß Pfeil P2 die andere Verlängerungslasche umgeklappt, bis sie auf der Verlängerungslasche 55 aufliegt (Fig. 8c). Die Verlängerungslaschen umschließen dann die Ecken des Bodens einwandfrei, so daß die Bodenecken beim Transport einwandfrei vor Beschädigung geschützt sind. Der Kantenverbinder 8f wird anschließend so weit nach oben geschoben, bis die Verlängerungen 54 bis 57 an der Bodenunterseite anliegen (Fig. 6). Auf diese Weise werden die Verlängerungen an sämtlichen Kantenverbindern 7f bis 10f in ihre Gebrauchslage untergebracht.

Bei der beschriebenen Ausführungsform nach den Fig. 6 und 7 erstrecken sich die Kantenverbinder 7f bis 10f bis relativ dicht unterhalb der oberen Stirnseite der Seitenwände (Fig. 6). Der Deckelboden 24f ist entsprechend wie bei der Ausführungsform nach den Fig. 1 bis 3 mit einer Versteifungsplatte 23f versehen, die mit ihren Rändern in den zwischen dem Deckelboden 24f und den oberen Stirnseiten 60, 61 der Kantenverbinder 7f bis 10f gebildeten Spalt 62 ragt. Der Deckel 11f umgreift mit seinem Rand 25f wie bei der Ausführungsform nach den Fig. 1 bis 3 den Grundkörper mit den Kantenverbindern 7f bis 10f. Die Versteifungsplatte 23f ist wesentlich dünner ausgebildet als die Versteifungsplatte 30 nach Fig. 3. Sie kann aus demselben oder einem anderen Material als der Deckel oder der Grundkörper bestehen. Bei der Ausführungsform nach Fig. 6 liegt der Deckel auf den Außenschenkeln der Kantenverbinder 7f bis 10f mit einer umlaufenden Schulter 63f. Sie ist an der Innenwandung des Deckelrandes 25f nahe der Unterseite des Deckelbodens 24f vorgesehen. Der Deckel 11f hat dadurch einen sicheren Halt und schließt den Grundkörper einwandfrei ab.

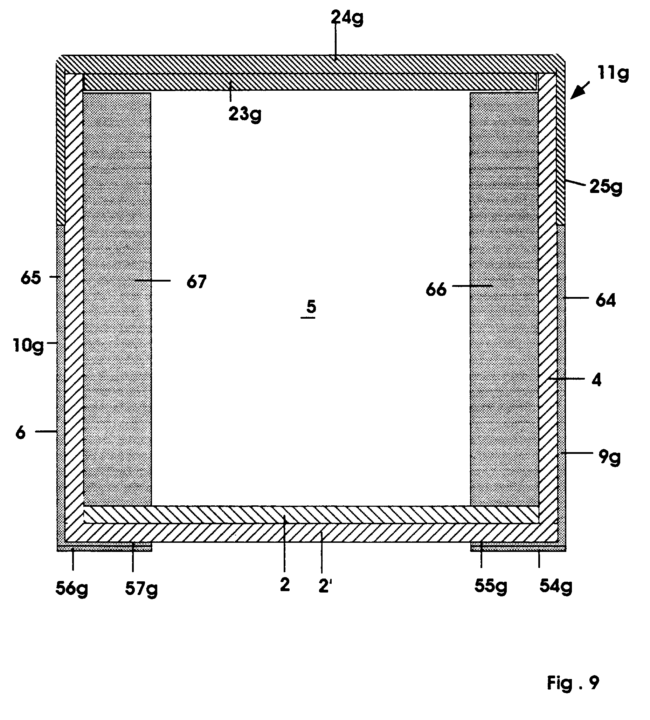

Bei der Ausführungsform nach Fig. 9 liegt der Deckel 10g auf verkürzten Außenschenkeln 64, 65 der Kantenverbinder 9g, 10g auf. Im Bereich der Kantenverbinder 9g, 10g steht der Deckelrand 25g nicht über, da er gleiche Dicke wie die Außenschenkel 64, 65 der Kantenverbinder hat. Die Außenschenkel 64, 65 reichen nur etwa bis in Dreiviertel der Höhe der Innenschenkel 66, 67 der Kantenverbinder 9g, 10g. Trotz dieser verkürzten Ausbildung der Außenschenkel gewährleisten die Kantenverbinder eine sichere Verbindung der Seitenwände 3 bis 6 miteinander. Die Außenschenkel 64, 65 haben entsprechend der Ausführungsform nach Fig. 6 Verlängerungen 54g bis 57g, die den Boden 2, 2' im Eckbereich vor Beschädigung schützen. Der Deckel 11g weist zur Versteifung die Versteifungsplatte 23g auf, die jedoch dicker ausgebildet ist als die Versteifungsplatte 23f. Die Versteifungsplatte 23g ist etwa gleich dick wie der Deckelboden 24g. Vorteilhaft besteht sie aus demselben Material wie der Deckel. Wie bei den übrigen Ausführungsformen ragt die Versteifungsplatte 23g zwischen die Innenschenkel 66, 67 der Kantenverbinder und den Deckelboden 24g. Dadurch wird eine hohe Formstabilität des Behältnisses und Sicherheit gegen Verschieben des Deckels erreicht.

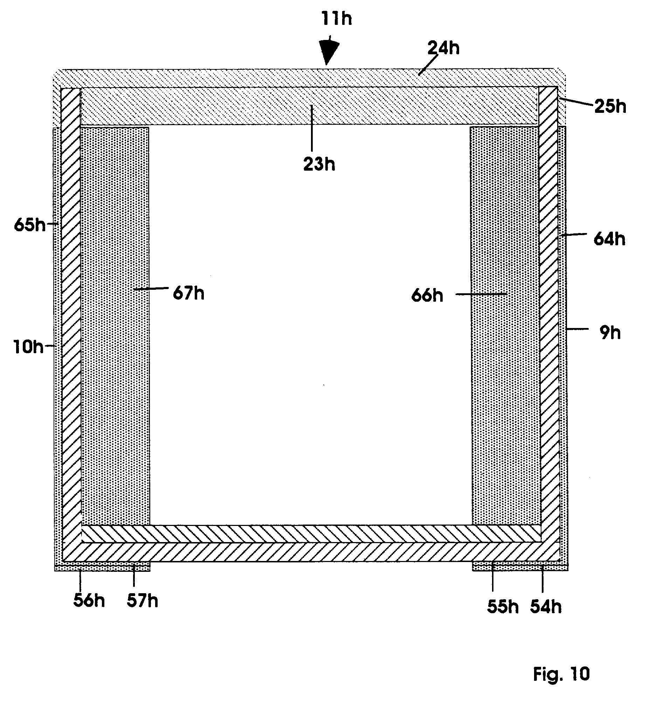

Die Ausführungsform nach Fig. 10 unterscheidet sich von der zuvor beschriebenen Ausführungsform im wesentlichen dadurch, daß der Deckelrand 25h des Deckels 11h relativ geringe Höhe hat. Der Deckelrand 25h hat im dargestellten Ausführungsbeispiel die gleiche Höhe wie die am Deckelboden 24h vorgesehene Versteifungsplatte 23h. Sie ist vorzugsweise etwa doppelt so dick wie der Deckelboden 24h. Die Kantenverbinder 9h, 10h haben gleich lange Innen- und Außenschenkel 64h bis 67h, die bis an den Deckelrand 25h bzw. die Versteifungsplatte 23h reichen. Auch bei dieser Ausführungsform sind die Bodenecken durch Verlängerungslaschen 54h bis 57h der Außenschenkel 64h, 65h geschützt, wie anhand der Fig. 6, 7, 8a und 8b erläutert worden ist.

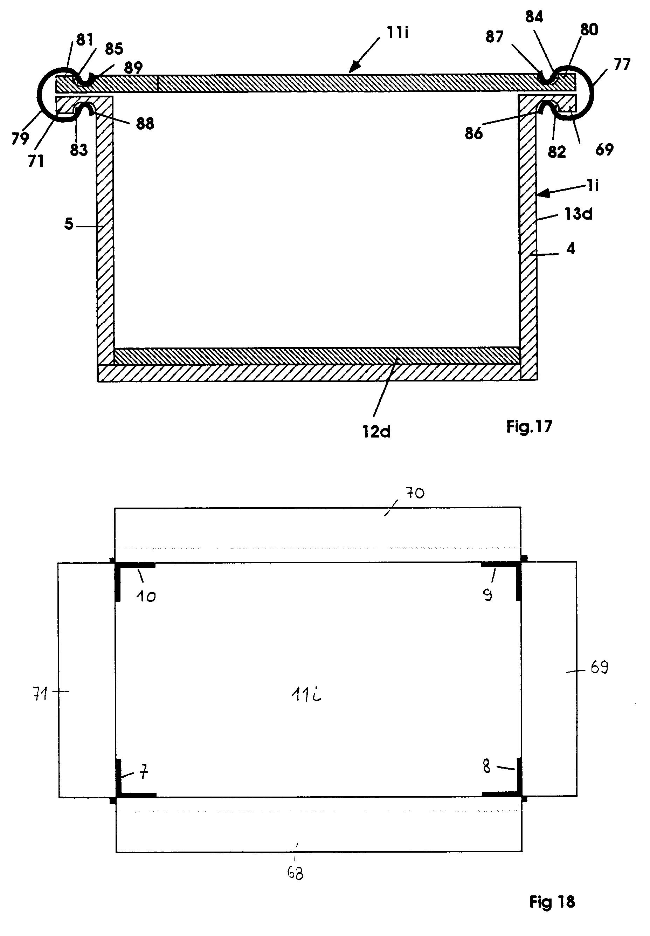

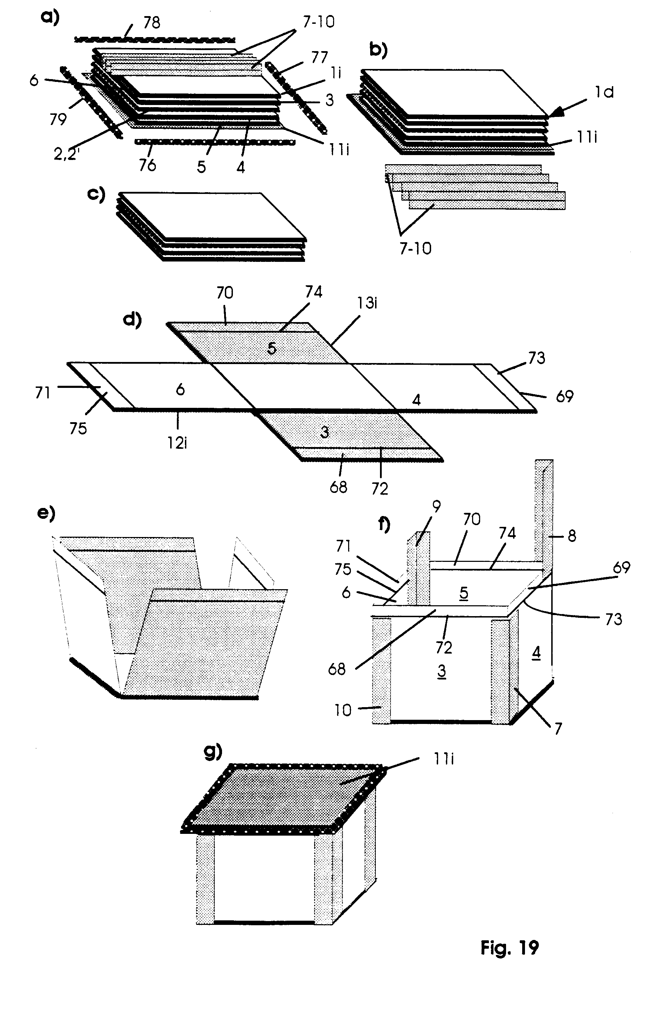

Das Behältnis gemäß Fig. 17 besteht wie das Behältnis nach Fig. 1 aus den beiden Grundkörperteilen 12i und 13i (Fig. 19d). Im Unterschied zur Ausführungsform nach den Fig. 1 bis 3 haben die Seitenwände 3 bis 6 Ränder 68 bis 71, die um Biegekanten 72 bis 75 (Fig. 19d) rechtwinklig abgewinkelt werden können. Diese Biegekanten sind wie bei den zuvor beschriebenen Ausführungsbeispielen vorteilhaft durch eine Prägung oder Stanzung der Seitenwände gebildet. Auf den rechtwinklig nach außen abgewinkelten Rändern 68 bis 71 liegt in der Gebrauchslage ein flach ausgebildeter Deckel 11i auf, der mit Halteteilen 76 bis 79 (Fig. 17 und 19a) am Grundkörper 1i befestigt ist. Die Ränder 68 bis 71 der Seitenwände 3 bis 6 sowie die Ränder 80 und 81 des Deckels 11i haben in Höhenrichtung übereinander liegende Vertiefungen 82, 83 und 84, 85, in die die Halteteile 76 bis 79 mit im Querschnitt etwa V-förmig ausgebildeten Enden 86 bis 89 ragen. Die Halteteile 76 bis 79 sind als offene Rohrprofile ausgebildet, die vorzugsweise teilkreisförmigen Querschnitt haben, der sich über etwa einen Dreiviertelkreis erstreckt, wobei die Enden in die rinnenartigen Enden 86 bis 89 übergehen.

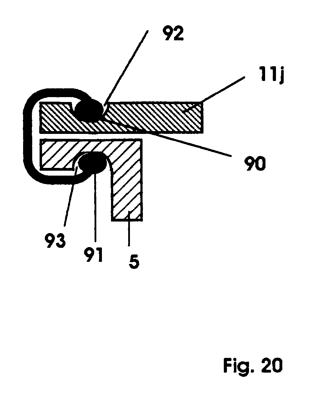

Anstelle dieser Halteteile können auch Halteteile vorgesehen sein (Fig. 20), die etwa C-förmigen Querschnitt haben, wobei an den Enden im Querschnitt etwa kreisförmige Verdickungen 90, 91 bzw. Wülste vorgesehen sind, die in die zugehörigen Vertiefungen 92, 93 des Deckels 11j bzw. der Seitenwand 5 ragen. Um das Behältnis gemäß Fig. 19 aus seiner Aufbewahrungslage gemäß Fig. 19a in die Gebrauchslage nach den Fig. 17 bzw. 19g überzuführen, werden zunächst im Deckel 11i, auf dem der Grundkörper 1i mit den Seitenwänden 3 bis 6 und dem Boden 2, 2' liegt, die Halteteile 76 bis 79 abgenommen (Fig. 19a). Anschließend werden gemäß Fig. 19 die auf dem Grundkörper 1i angeordneten Kantenverbinder 7 bis 10 vom Grundkörper 1i abgenommen und neben dem Deckel 11i auf dem Boden abgelegt. Anschließend wird der Grundkörper 1i in die in Fig. 19d dargestellte flache Lage ausgebreitet, wobei die Seitenwände 4 und 6 und 3 und 5 vom Boden weggeklappt werden. Anschließend werden gemäß Fig. 19e die Seitenwände 3 bis 6 nach oben aufgerichtet und dann die Kantenverbinder 7 bis 10 von oben nacheinander über die miteinander zu verbindenden Wände 3 bis 6 geschoben (Fig. 19f). Schließlich werden die Ränder 68 bis 71 der Seitenwände um ihre Biegekanten 72 bis 75 nach außen rechtwinklig abgebogen. Auf diese abgebogenen Ränder wird dann der Deckel 11i (Fig. 19g) gelegt und anschließend über die deckungsgleich liegenden Ränder der Seitenwände und des Deckels die Halteteile 76 bis 79 geschoben. Die Halteteile 76 bis 79 gemäß den Fig. 17, 18 und 20 sind federelastisch ausgebildet. Ihre freien Enden haben einen Abstand voneinander, der kleiner ist als die Dicke der aufeinander liegenden Ränder der Seitenwände 3 bis 6 und des Deckels 11i, 11j. Dadurch werden die Halteteile beim Aufschieben geringfügig elastisch aufgeweitet, so daß sie fest an den entsprechenden Behälterrändern sitzen. Die Enden 86 bis 89 der Halteteile 76 bis 79 haben eine gebogene V-Spitze, so daß der Deckel 11i und die Seitenwände 3 bis 6 nicht beschädigt werden. Auch die wulstartigen, im Querschnitt teilkreisförmigen Verdickungen 90, 91 bei der Ausführungsform gemäß Fig. 20 verhindern beim Aufschieben der Halteteile eine Beschädigung der Seitenwände 3 bis 6 und des Deckels 11j.

Die Halteteile umgreifen die Ränder und sind infolge ihrer formschlüssigen Verbindung mit den Seitenwänden 3 bis 6 zuverlässig gegen unbeabsichtigtes Lösen quer zu ihrer Längsrichtung gesichert.

Sämtliche Kantenverbinder lassen sich einfach und kostengünstig durch Strangpressen herstellen.

Das Behältnis gemäß Fig. 17 kann mit weiteren gleichen Behältnissen einfach gekoppelt werden, indem ein weiteres Behältnis auf das Behältnis gestellt wird und in dieser Lage durch die Halteteile 76 bis 79 lagegesichert ist. Das obere Behältnis liegt dann mit seinem Boden an den Halteteilen an und kann dadurch nicht aus seiner Lage zum unteren Behältnis verschoben werden.

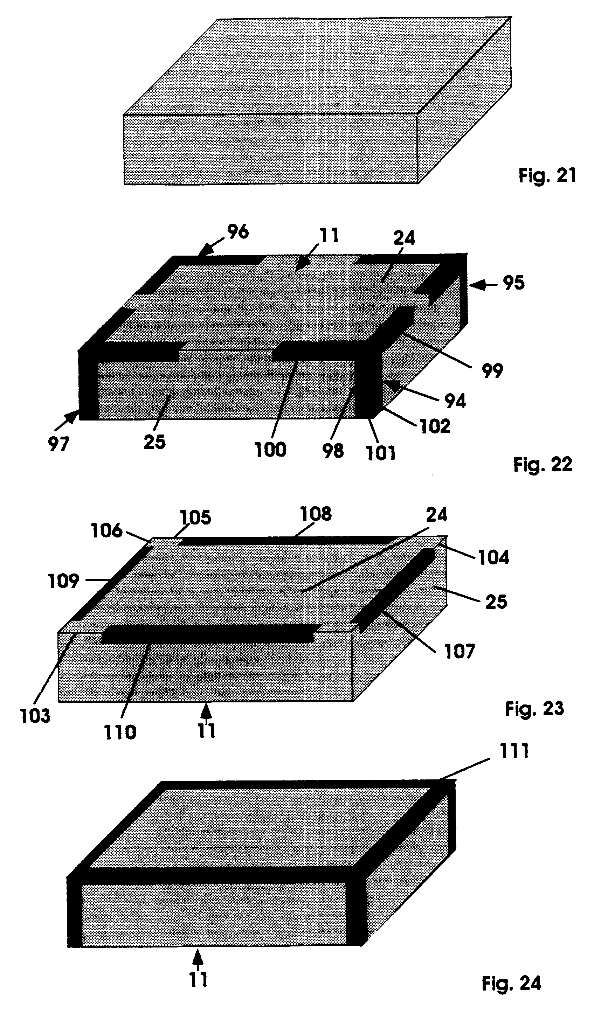

Fig. 21 zeigt einen Deckel, wie er beim Behältnis gemäß Fig. 1 vorgesehen ist. Zum Schutz dieses Deckels können Eck- und Kantenstücke vorgesehen sein, die auf die Ecken und Kanten aufgesetzt bzw. mit diesen verklebt werden.

Fig. 22 zeigt den Deckel nach Fig. 21 mit an allen vier Ecken vorgesehenen Eckstücken 94 bis 97. Sie sind vorzugsweise gleich ausgebildet. Anhand des Eckstückes 94 wird dessen Form näher erläutert. Es hat drei gleich lange Arme 98, 99 und 100, deren Länge der Höhe des Randes 25 des Deckels 11 entspricht. Die Arme 98 bis 100 haben zwei gleich breite, senkrecht zueinander liegende Schenkel 101, 102 (vgl. den Arm 98), mit denen die Arme 98 bis 100 flächig an der Außenseite des Deckelrandes 25 bzw. des Deckelbodens 24 anliegen. Die Eckstücke 94 bis 97 sind vorzugsweise am Deckelboden und am Deckelrand durch Kleben befestigt.

Gemäß Fig. 23 sind die zwischen dem Deckelboden 24 und dessen Rand 25 gebildeten Kanten 103 bis 106 durch Kantenstücke 107 bis 110 vor Beschädigung geschützt. Diese Kantenstücke sind durch Winkelschienen gebildet, die mit ihren Schenkeln auf der Außenseite des Deckelbodens 24 und des Randes 25 des Deckels 11 verklebt sind. Vorzugsweise sind die Kantenstücke 107 bis 111 symmetrisch zu den jeweiligen Kanten 103 bis 106 angeordnet. Sie weisen von den Eckbereichen des Deckels jeweils vorzugsweise gleichen Abstand auf.

Gemäß Fig. 24 ist der Deckel nicht nur an den Ecken oder den bodenseitigen Längskanten geschützt, vielmehr sind alle Kanten und Ecken durch ein einziges Rahmenteil 111 geschützt. Es umgreift die Kanten und Ecken des Deckels 11 formschlüssig, wodurch dieser optimal geschützt ist.

## Patentansprüche

1. Transport- und Verpackungsbehältnis mit mindestens einem Boden (2, 2') und Seitenwänden (3 bis 6) sowie einem Deckel (11), bei dem mindestens die Seitenwände (3 bis 6) über abnehmbare Kantenverbinder (7 bis 10) miteinander verbunden sind, die die Seitenwände (3 bis 6) mit Außen- und Innenschenkel (32, 33; 32a, 33a; 32b, 33b; 32c, 33c; 29d, 30d; 32e, 33e) umgreifen, wobei in den Bereich zwischen den einander gegenüberliegenden Schenkeln mindestens ein Profilteil (40, 41; 40 a, 41a; 40b, 41b; 40c, 41c; 40d, 41d; 40e, 41e) ragt, der entlang dem Längsrand der Schenkel (32, 33; 32a, 33a; 32b, 33b; 32c, 33c; 29d, 30d; 32e, 33e) verläuft und in eine Vertiefung (42, 43; 42e, 43e) der Seitenwände (3 bis 6) ragt,
dadurch gekennzeichnet, daß die Schenkel (32, 33; 32a, 33a; 32b, 33b; 32c, 33c; 29d, 30d; 32e, 33e) unter elastischer Verformung an den Seitenwänden (3 bis 6) anliegen und daß das Profilteil (40, 41; 40a, 41a; 40b, 41b; 40c, 41c; 40d, 41d; 40e, 41e) und die Vertiefung (42, 43; 42e, 43e) der Seitenwände (3 bis 6) mit gekrümmten Flächen aneinanderliegen.

2. Behältnis nach Anspruch 1,
dadurch gekennzeichnet, daß der Profilteil (40, 41; 40a, 41a; 40 c, 41c; 40d, 41d; 40e, 41e) durch eine wulstartige Verdickung der Schenkel (32, 33; 32a, 33a; 32c, 33c; 29d, 30d; 32e, 33e) gebildet ist.

3. Behältnis nach Anspruch 2,
dadurch gekennzeichnet, daß die Verdickungen (40, 41; 40a, 41a; 40c, 41c; 40d, 41d; 40e, 41e) der Schenkel (32, 33; 32a, 33a; 32c, 33c; 29d, 30d; 32e, 33e) im Querschnitt teilkreisförmig, vorzugsweise halbkreisförmig ausgebildet sind.

4. Behältnis nach Anspruch 1,
dadurch gekennzeichnet, daß der Profilteil (40b, 41b) durch hakenförmige, konvex nach außen gekrümmte Endabschnitte der Schenkel (33b) gebildet ist.

5. Behältnis nach einem der Ansprüche 1 bis 3,
dadurch gekennzeichnet, daß die Außenschenkel (32c, 33c; 32d, 33d; 32e, 33e) und die Innenschenkel (29c, 30c; 29d, 30d; 29e, 30e) der Kantenverbinder (7 bis 10) eben ausgebildet sind und daß ihr Abstand voneinander geringfügig kleiner ist als die Dicke der Seitenwände (3 bis 6).

6. Behältnis nach einem der Ansprüche 1 bis 5,
dadurch gekennzeichnet, daß der Profilteil (40, 41; 40a, 41a; 40b, 41b; 40c, 41c; 40e, 41e) an den Außenschenkeln (32, 33; 32a, 33a; 32b, 33b; 32c, 33c; 32e, 33e) vorgesehen ist.

7. Behältnis nach einem der Ansprüche 1 bis 3 und 5,
dadurch gekennzeichnet, daß der Profilteil (40d, 41d) an den eben ausgebildeten Innenschenkeln (29d, 30d) vorgesehen ist.

8. Behältnis nach einem der Ansprüche 1 bis 7,
dadurch gekennzeichnet, daß die Vertiefungen (42, 43; 42e, 43e) der Seitenwände (3 bis 6) bei aus Kartonmaterial bestehendem Behältnis durch Eindrücken gebildet sind.

9. Behältnis nach einem der Ansprüche 1 bis 8,
dadurch gekennzeichnet, daß die Länge der Kantenverbinder (7 bis 10) geringer ist als die Höhe der Seitenwände (3 bis 6).

10. Behältnis nach einem der Ansprüche 1 bis 8,
dadurch gekennzeichnet, daß die Länge der Kantenverbinder (7f bis 10f; 9g, 10g; 9h, 10h) größer ist als die Höhe der Seitenwände (3 bis 6).

11. Behältnis nach Anspruch 10,
dadurch gekennzeichnet, daß die Kantenverbinder (7f bis 10f; 9g, 10g; 9h, 10h) zur Bildung eines Bodenschutzes (50 bis 53) um eine Biegestelle (58, 59) klappbare Enden (54 bis 57) haben.

12. Behältnis nach Anspruch 11,
dadurch gekennzeichnet, daß die Biegestelle (58, 59) durch eine Perforation, eine Prägestelle oder dergleichen gebildet ist.

13. Behältnis nach einem der Ansprüche 1 bis 4, 6 und 8 bis 12,
dadurch gekennzeichnet, daß die Außenschenkel (32, 33; 32a, 33a; 32b, 33b) der Kantenverbinder (7, 7a bis 7e) konvex nach außen gekrümmt sind.

14. Behältnis nach Anspruch 13,
dadurch gekennzeichnet, daß die Außenschenkel (32, 33; 32a, 33a; 32b, 33b), im Querschnitt gesehen, teilkreisförmig gekrümmt ineinander übergehen.

15. Behältnis nach einem der Ansprüche 1 bis 14,
dadurch gekennzeichnet, daß der Deckel (11) die Seitenwände (3 bis 6) und die Kantenverbinder (7 bis 10) umgreift.

16. Behältnis nach einem der Ansprüche 1 bis 15,
dadurch gekennzeichnet, daß der Deckel (11) mit seinem Rand (25) auf den Kantenverbindern (7 bis 10) sitzt.

17. Behältnis nach einem der Ansprüche 1 bis 16,
dadurch gekennzeichnet, daß auf dem Deckelboden (24; 24f; 24g; 24h) eine Versteifungseinlage (23; 23f; 23g; 23h) vorgesehen, vorzugsweise verklebt, ist.

18. Behältnis nach Anspruch 17,
dadurch gekennzeichnet, daß die Versteifungseinlage (23; 23f; 23g; 23h) eine Platte ist, deren Ränder vorzugsweise allseitigen Abstand vom Deckelrand (25) haben.

19. Behältnis nach Anspruch 18,
dadurch gekennzeichnet, daß die Seitenwände (3 bis 6) bei geschlossenem Behältnis mit ihren freien Enden in einen zwischen dem Deckelrand (25; 25f; 25g; 25h) und der Versteifungseinlage (23; 23f; 23g; 23h) gebildeten Spalt ragen.

20. Behältnis nach einem der Ansprüche 17 bis 19,
dadurch gekennzeichnet, daß die Versteifungseinlage (23; 23f; 23g; 23h) in einen zwischen dem Deckelboden und den oberen Stirnseiten (60, 61) der Kantenverbinder (9, 10; 7f, 8f; 9g, 10g; 9h, 10h) gebildeten Spalt (62) ragen.

21. Behältnis nach einem der Ansprüche 17 bis 20,
dadurch gekennzeichnet, daß die Versteifungseinlage (23) auf den Enden der Kantenverbinder (9, 10) aufliegt.

22. Behältnis nach Anspruch 21,
dadurch gekennzeichnet, daß die Versteifungseinlage (23f) mit geringem Abstand von den Schenkelenden (60, 61) der Kantenverbinder (7f, 8f) liegt.

23. Behältnis nach einem der Ansprüche 17 bis 22,
dadurch gekennzeichnet, daß die Versteifungseinlage (23f) dünner, vorzugsweise um ein Mehrfaches dünner ist als der Deckelboden (24f).

24. Behältnis nach einem der Ansprüche 17 bis 23,
dadurch gekennzeichnet, daß die Versteifungseinlage (23, 23g) etwa gleiche Dicke hat wie der Deckelboden (24, 24g).

25. Behältnis nach einem der Ansprüche 16 bis 24, dadurch gekennzeichnet, daß der Deckel (24g) mit seinem Rand (29g) auf verkürzten Außenschenkeln (64, 65) der Kantenverbinder (9g, 10g) aufliegt.

26. Behältnis nach einem der Ansprüche 17 bis 25,
dadurch gekennzeichnet, daß die Versteifungseinlage (23h) dicker, vorzugsweise etwa doppelt so dick ist wie der Deckelboden (24h).

27. Behältnis nach einem der Ansprüche 17 bis 26,
dadurch gekennzeichnet, daß die Versteifungseinlage (23, 23f bis 23h) aus demselben Material wie der Deckel (11, 11f bis 11h) besteht.

28. Behältnis nach einem der Ansprüche 17 bis 27,
dadurch gekennzeichnet, daß die Versteifungseinlage (23, 23f bis 23h) aus einem anderen Werkstoff besteht wie der Deckel (11, 11f bis 11h).

29. Behältnis nach einem der Ansprüche 1 bis 28,
dadurch gekennzeichnet, daß der Deckel (11i) als Platte ausgebildet ist.

30. Behältnis nach Anspruch 29,
dadurch gekennzeichnet, daß die Seitenwände (3 bis 6) einen nach außen ragenden Rand (68 bis 71) aufweisen.

31. Behältnis nach Anspruch 30,
dadurch gekennzeichnet, daß der Deckel (11i) mit seinem Rand (80, 81) auf den Rändern (68 bis 71) der Seitenwände (3 bis 6) aufliegt.

32. Behältnis nach Anspruch 31,
dadurch gekennzeichnet, daß der Deckel (11i) mit Haltern (76 bis 79) auf den Rändern (68 bis 71) der Seitenwände (3 bis 6) befestigt ist.

33. Behältnis nach Anspruch 32,
dadurch gekennzeichnet, daß die Halter (76 bis 79) durch Profilschienen gebildet sind.

34. Behältnis nach Anspruch 33,
dadurch gekennzeichnet, daß die Profilschienen (76 bis 79) etwa C-förmigen, vorzugsweise etwa dreiviertelkreisförmigen Querschnitt haben.

35. Behältnis nach Anspruch 34,
dadurch gekennzeichnet, daß die Enden (86 bis 88) der Schenkel der Profilschienen (76 bis 79) verdickt und/oder V-förmig gekrümmt sind.

36. Behältnis nach Anspruch 35,
dadurch gekennzeichnet, daß die Profilschienen (76 bis 79) in Vertiefungen (82 bis 84) der Ränder (80, 81) des Deckels (11i) und/oder der Seitenwände (3 bis 6) ragen.

37. Behältnis nach einem der Ansprüche 1 bis 36,
dadurch gekennzeichnet, daß mindestens ein Teil, vorzugsweise alle Ecken und Kanten des Deckels (11) versteift sind.

38. Behältnis nach Anspruch 37,
dadurch gekennzeichnet, daß die Versteifungsteile (47 bis 49; 50 bis 53; 54 bis 57; 107 bis 110 und 111) etwa L-förmigen Querschnitt haben.

39. Behältnis nach Anspruch 38,
dadurch gekennzeichnet, daß die Versteifungsteile (107 bis 111) als Winkelschienen ausgebildet sind.

40. Behältnis nach einem der Ansprüche 37 bis 39,
dadurch gekennzeichnet, daß die Versteifungsteile (94 bis 97) Winkelstücke sind, die auf den Ecken des Deckels (11) sitzen.

41. Behältnis nach einem der Ansprüche 37 bis 40,
dadurch gekennzeichnet, daß die Versteifungsteile (111) durch ein einziges Rahmenteil gebildet sind.

## Claims

1. A transport and packaging container having at least one base (2, 2'), lateral walls (3 to 6) and a lid (11), in which at least the lateral walls (3 to 6) are connected to one another via removable edge connectors (7 to 10) which engage around the lateral walls (3 to 6) with outer and inner legs (32, 33; 32a, 33a; 32b, 33b; 32c, 33c; 29d, 30d; 32e, 33e), at least one shaped part (40, 41; 40a, 41a; 40b, 41b; 40c, 41c; 40d, 41d; 40e, 41e) projecting into the region between the facing legs, this shaped part extending along the longitudinal edge of the legs (32, 33; 32a, 33a; 32b, 33b; 32c, 33c; 29d, 30d; 32e, 33e) and projecting into a cavity (42, 43; 42e, 43e) in the lateral walls (3 to 6), characterised in that the legs (32, 33; 32a, 33a; 32b, 33b; 32c, 33c; 29d, 30d; 32e, 33e) contact with the lateral walls (3 to 6) with elastic deformation, and in that the shaped part (40, 41; 40a, 41a; 40b, 41b; 40c, 41c; 40d, 41d; 40e, 41e) and the cavity (42, 43; 42e, 43e) in the lateral walls (3 to 6) rest against one another by means of curved surfaces.

2. A container in accordance with Claim 1, characterised in that the shaped part (40, 41; 40a, 41a; 40c, 41c; 40d, 41d; 40e, 41e) is formed by a bulge-like enlargement of the legs (32, 33; 32a, 33a; 32c, 33c; 29d, 30d; 32e, 33e).

3. A container in accordance with Claim 2, characterised in that in cross-section, the enlargements (40, 41; 40a, 41a; 40c, 41c; 40d, 41d; 40e, 41e) of the legs (32, 33; 32a, 33a; 32c, 33c; 29d, 30d; 32e, 33e) are part-circular, are preferably semi-circular.

4. A container in accordance with Claim 1, characterised in that the shaped part (40b, 41b) is formed by hook-shaped, convexly outwards-curved end portions of the legs (33b).

5. A container in accordance with any one of Claims 1 to 3, characterised in that the outer legs (32c, 33c; 32d, 33d; 32e, 33e) and the inner legs (29c, 30c; 29d, 30d; 29e, 30e) of the edge connectors (7 to 10) are plane, and in that their distance apart is slightly less than the thickness of the lateral walls (3 to 6).

6. A container in accordance with any one of Claims 1 to 5, characterised in that the shaped part (40, 41; 40a, 41a; 40b, 41b; 40c, 41c; 40e, 41e) is provided on the outer legs (32, 33; 32a, 33a; 32b, 33b; 32c, 33c; 32e, 33e).

7. A container in accordance with any one of Claims 1 to 3 and 5, characterised in that the shaped part (40d, 41d) is provided on the plane inner legs (29d, 30d).

8. A container in accordance with any one of Claims 1 to 7, characterised in that the cavities (42, 43; 42e, 43e) in the lateral walls (3 to 6) are formed by indenting when the container is composed of cardboard.

9. A container in accordance with any one of Claims 1 to 8, characterised in that the length of the edge connectors (7 to 10) is less than the height of the lateral walls (3 to 6).

10. A container in accordance with any one of Claims 1 to 8, characterised in that the length of the edge connectors (7f to 10f; 9g, 10g; 9h, 10h) is greater than the height of the lateral walls (3 to 6).

11. A container in accordance with Claim 10, characterised in that the edge connectors (7f to 10f; 9g, 10g; 9h, 10h) have ends (54 to 57) hinged about a bending point (58, 59) to form a base protector (50 to 53).

12. A container in accordance with Claim 11, characterised in that the bending point (58, 59) is formed by a perforation, stamping or the like.

13. A container in accordance with any one of Claims 1 to 4, 6 and 8 to 12, characterised in that the outer legs (32, 33; 32a, 33a; 32b, 33b) of the edge connectors (7, 7a to 7e) are curved outwards in a convex manner.

14. A container in accordance with Claim 13, characterised in that when viewed in cross-section, the outer legs (32, 33; 32a, 33a, 32b, 33b) merge, curving in the form of part of a circle.

15. A container in accordance with any one of Claims 1 to 14, characterised in that the lid (11) engages around the lateral walls (3 to 6) and the edge connectors (7 to 10).

16. A container in accordance with any one of Claims 1 to 15, characterised in that the edge (25) of the lid (11) is seated on the edge connectors (7 to 10).

17. A container in accordance with any one of Claims 1 to 16, characterised in that a stiffening insert (23; 23f; 23g; 23h) is provided on the lid base (24; 24f; 24g; 24h), preferably stuck thereon.

18. A container in accordance with Claim 17, characterised in that the stiffening insert (23; 23f; 23g; 23h) is a plate whose edges are preferably at a distance from the lid edge (25) all the way round.

19. A container in accordance with Claim 18, characterised in that when the container is closed, the free ends of the lateral walls (3 to 6) project into a gap formed between the lid edge (25; 25f; 25g; 25h) and the stiffening insert (23; 23f; 23g; 23h).

20. A container in accordance with any one of Claims 17 to 19, characterised in that the stiffening insert (23; 23f; 23g; 23h) projects into a gap (62) formed between the lid base and the upper end-faces (60, 61) of the edge connectors (9, 10; 7f, 8f; 9g, 10g; 9h, 10h).

21. A container in accordance with any one of Claims 17 to 20, characterised in that the stiffening insert (23) rests on the ends of the edge connectors (9, 10).

22. A container in accordance with Claim 21, characterised in that the stiffening insert (23f) is located at a short distance from the leg ends (60, 61) of the edge connectors (7f, 8f).

23. A container in accordance with any one of Claims 17 to 22, characterised in that the stiffening insert (23f) is thinner than the lid base (24f), preferably many times over.

24. A container in accordance with any one of Claims 17 to 23, characterised in that the stiffening insert (23, 23g) is approximately the same thickness as the lid base (24, 24g).

25. A container in accordance with any one of Claims 16 to 24, characterised in that the edge (29g) of the lid (24g) rests on the shortened outer legs (64, 65) of the edge connectors (9g, 10g).

26. A container in accordance with any one of Claims 17 to 25, characterised in that the stiffening insert (23h) is thicker, preferably approximately twice as thick, as the lid base (24h).

27. A container in accordance with any one of Claims 17 to 26, characterised in that the stiffening insert (23, 23f to 23h) is composed of the same material as the lid (11, 11f to 11h).

28. A container in accordance with any one of Claims 17 to 27, characterised in that the stiffening insert (23, 23f to 23h) is composed of a different material to the lid (11, 11f to 11h).

29. A container in accordance with any one of Claims 1 to 28, characterised in that the lid (11i) is in the form of a plate.

30. A container in accordance with Claim 29, characterised in that the lateral walls (3 to 6) have an outwards projecting edge (68 to 71).

31. A container in accordance with Claim 30, characterised in that the edge (80, 81) of the lid (11i) rests on the edges (68 to 71) of the lateral walls (3 to 6).

32. A container in accordance with Claim 31, characterised in that the lid (11i) is secured on the edges (68 to 71) of the lateral walls (3 to 6) by means of fasteners (76 to 79).

33. A container in accordance with Claim 32, characterised in that the fasteners (76 to 79) are formed by shaped rails.

34. A container in accordance with Claim 33, characterised in that the shaped rails (76 to 79) are approximately C-shaped in cross-section, preferably approximately the shape of three-quarters of a circle.

35. A container in accordance with Claim 34, characterised in that the ends (86 to 88) of the legs of the shaped rails (76 to 79) are enlarged and/or are curved in a V-shape.

36. A container in accordance with Claim 35, characterised in that the shaped rails (76 to 79) project into cavities (82 to 84) of the edges (80, 81) of the lid (11i) and/or of the lateral walls (3 to 6).

37. A container in accordance with any one of Claims 1 to 36, characterised in that at least part, preferably all corners and edges, of the lid (11), are stiffened.

38. A container in accordance with Claim 37, characterised in that the stiffening parts (47 to 49; 50 to 53; 54 to 57; 107 to 110 and 111) have an approximately L-shaped cross-section.

39. A container in accordance with Claim 38, characterised in that the stiffening parts (107 to 111) are in the form of angular bars.

40. A container in accordance with any one of Claims 37 to 39, characterised in that the stiffening parts (94 to 97) are angular parts which are located on the corners of the lid (11).

41. A container in accordance with any one of Claims 37 to 40, characterised in that the stiffening parts (111) are formed by a single frame part.

## Revendications

1. Récipient de transport et d'emballage comportant au moins un fond (2, 2') et des parois latérales (3 à 6) ainsi qu'un couvercle (11), dans lequel au moins les parois latérales (3 à 6) sont reliées les unes aux autres par l'intermédiaire de raccords d'arêtes (7 à 10) amovibles qui entourent les parois latérales (3 à 6) avec des branches extérieures et intérieures (32, 33 ; 32a, 33a ; 32b, 33b ; 32c, 33c ; 29d, 30d ; 32e, 33e), au moins une pièce profilée (40, 41 ; 40a, 41a ; 40b, 41b ; 40c, 41c ; 40d, 41d ; 40e, 41e) faisant saillie dans la région située entre les branches se faisant face, ladite pièce profilée s'étendant le long du bord longitudinal des branches (32, 33 ; 32a, 33a ; 32b, 33b ; 32c, 33c ; 29d, 30d ; 32e, 33e) et faisant saillie dans un creux (42, 43 ; 42e, 43e) des parois latérales (3 à 6), caractérisé en ce que les branches (32, 33 ; 32a, 33a ; 32b, 33b ; 32c, 33c ; 29d, 30d ; 32e, 33e) reposent par déformation élastique sur les parois latérales (3 à 6) et en ce que la pièce profilée (40, 41 ; 40a, 41a ; 40b, 41b ; 40c, 41c ; 40d, 41d ; 40e, 41e) et le creux (42, 43 ; 42e, 43e) des parois latérales (3 à 6) sont en appui l'une sur l'autre avec des surfaces bombées.

2. Récipient selon la revendication 1, caractérisé en ce que la pièce profilée (40, 41 ; 40a, 41a ; 40b, 41b ; 40c, 41c ; 40d, 41d ; 40e, 41e) est formée par un renflement en forme de bourrelet des branches (32, 33 ; 32a, 33a ; 32b, 33b ; 32c, 33c ; 29d, 30d ; 32e, 33e).

3. Récipient selon la revendication 2, caractérisé en ce que les renflements (40, 41 ; 40a, 41a ; 40b, 41b ; 40c, 41c ; 40d, 41d ; 40e, 41e) des branches (32, 33 ; 32a, 33a ; 32b, 33b ; 32c, 33c ; 29d, 30d ; 32e, 33e) sont réalisés de section partiellement circulaire, de préférence semi-circulaire.

4. Récipient selon la revendication 1, caractérisé en ce que la pièce profilée (40b, 41b) est formée par des tronçons d'extrémité en forme de crochets des branches (33b), qui sont recourbés de manière convexe vers l'extérieur.

5. Récipient selon l'une quelconque des revendications 1 à 3, caractérisé en ce que les branches extérieures (32c, 33c ; 32d, 33d ; 32e, 33e) et les branches intérieures (29c, 30c ; 29d, 30d ; 29e, 30e) des raccords d'arêtes (7 à 10) sont réalisées planes et en ce que leur écartement les unes par rapport aux autres est légèrement inférieur à l'épaisseur des parois latérales (3 à 6).

6. Récipient selon l'une quelconque des revendications 1 à 5, caractérisé en ce que la pièce profilée (40, 41 ; 40a, 41a ; 40b, 41b ; 40c, 41c ; 40d, 41d ; 40e, 41e) est prévue sur les branches extérieures (32, 33 ; 32a, 33a ; 32b, 33b ; 32c, 33c ; 32e, 33e).

7. Récipient selon l'une quelconque des revendications 1 à 3 et 5, caractérisé en ce que la pièce profilée (40d, 41d) est prévue sur la branche intérieure réalisée plane (29d, 30d).

8. Récipient selon l'une quelconque des revendications 1 à 7, caractérisé en ce que les creux (42, 43 ; 42e, 43e) des parois latérales (3 à 6) sont formés par enfoncement dans le cas d'un récipient en carton.

9. Récipient selon l'une quelconque des revendications 1 à 8, caractérisé en ce que la longueur des raccords d'arêtes (7 à 10) est inférieure à la hauteur des parois latérales (3 à 6).

10. Récipient selon l'une quelconque des revendications 1 à 8, caractérisé en ce que la longueur des raccords d'arêtes (7f à 10f ; 9g, 10g, 9h 10h) est supérieure à la hauteur des parois latérales (3 à 6).

11. Récipient selon la revendication 10, caractérisé en ce que les raccords d'arêtes (7f à 10f ; 9g, 10g, 9h, 10h) ont des extrémités (54 à 57) pliables autour d'une pliure (58, 59) pour former une protection de fond (50 à 53).

12. Récipient selon la revendication 11, caractérisé en ce que la pliure (58, 59) est formée par une perforation, un estampage ou similaire.

13. Récipient selon l'une quelconque des revendications 1 à 4, 6 et 8 à 12, caractérisé en ce que les branches extérieures (32, 33 ; 32a, 33a ; 32b, 33b) des raccords d'arêtes (7, 7a à 7e) sont bombées de manière convexe vers l'extérieur.

14. Récipient selon la revendication 13, caractérisé en ce que les branches extérieures (32, 33 ; 32a, 33a ; 32b, 33b), vues en section, se transforment les unes dans les autres sous forme bombée partiellement circulaire.

15. Récipient selon l'une quelconque des revendications 1 à 14, caractérisé en ce que le couvercle (11) entoure les parois latérales (3 à 6) et les raccords d'arêtes (7 à 10).

16. Récipient selon l'une quelconque des revendications 1 à 15, caractérisé en ce que le couvercle (11) est posé avec son bord (25) sur les raccords d'arêtes (7 à 10).

17. Récipient selon l'une quelconque des revendications 1 à 16, caractérisé en ce qu'il est prévu sur le fond de couvercle (24 ; 24f ; 24g ; 24 h) une couche de renforcement (23 ; 23f ; 23g ; 23h) qui est de préférence collée.

18. Récipient selon la revendication 17, caractérisé en ce que la couche de renforcement (23 ; 23f ; 23g ; 23h) est une plaque dont les bords ont de préférence un écartement de tous les côtés par rapport au bord du couvercle (25).

19. Récipient selon la revendication 18, caractérisé en ce que lorsque le récipient est fermé, les parois latérales (3 à 6) font saillie avec leurs extrémités libres dans une fente formée entre le bord du couvercle (25 ; 25f ; 25g ; 25h) et la couche de renforcement (23 ; 23f ; 23g ; 23h).

20. Récipient selon l'une quelconque des revendications 17 à 19, caractérisé en ce que la couche de renforcement (23 ; 23f ; 23g ; 23h) fait saillie dans une fente formée entre le fond de couvercle et les faces frontales (60, 61) supérieures des raccords d'arêtes (9, 10 ; 7f, 8f ; 9g, 10g ; 10h).

21. Récipient selon l'une quelconque des revendications 17 à 20, caractérisé en ce que la couche de renforcement (23) repose sur les extrémités des raccords d'arêtes (9, 10).

22. Récipient selon la revendication 21, caractérisé en ce que la couche de renforcement (23f) se trouve à faible distance des extrémités des branches (60, 61) des raccords d'arêtes (7f, 8f).

23. Récipient selon l'une quelconque des revendications 17 à 22, caractérisé en ce que la couche de renforcement (23f) est plus mince, de préférence plus mince d'un multiple que le fond de couvercle (24f).

24. Récipient selon l'une quelconque des revendications 17 à 23, caractérisé en ce que la couche de renforcement (23, 23g) a approximativement la même épaisseur que le fond de couvercle (24, 24g).

25. Récipient selon l'une quelconque des revendications 16 à 24, caractérisé en ce que le couvercle (24g) repose avec son bord (29g) sur des branches extérieures (64, 65) raccourcies des raccords d'arêtes (9g, 10g).

26. Récipient selon l'une quelconque des revendications 17 à 25, caractérisé en ce que la couche de renforcement (23h) est plus épaisse, de préférence approximativement deux fois plus épaisse que le fond de couvercle (24h).

27. Récipient selon l'une quelconque des revendications 17 à 26, caractérisé en ce que la couche de renforcement (23, 23f à 23h) est constituée par le même matériau que le couvercle (11, 11f à 11h).

28. Récipient selon l'une quelconque des revendications 17 à 27, caractérisé en ce que la couche de renforcement (23, 23f à 23h) est constituée par un autre matériau que le couvercle (11, 11f à 11h).

29. Récipient selon l'une quelconque des revendications 1 à 28, caractérisé en ce que le couvercle (11i) est réalisé sous forme de plaque.

30. Récipient selon la revendication 29, caractérisé en ce que les parois latérales (3 à 6) présentent un bord (68 à 71) faisant saillie vers l'extérieur.

31. Récipient selon la revendication 30, caractérisé en ce que le couvercle (11i) repose avec son bord (80, 81) sur les bords (68 à 71) des parois latérales (3 à 6).

32. Récipient selon la revendication 31, caractérisé en ce que le couvercle (11i) est fixé avec des fixations (76 à 79) sur les bords (68 à 71) des parois latérales (3 à 6).

33. Récipient selon la revendication 32, caractérisé en ce que les fixations (76 à 79) sont formées par des rails profilés.

34. Récipient selon la revendication 33, caractérisé en ce que les rails profilés (76 à 79) ont une section en forme de C, de préférence approximativement en trois quarts de cercle.

35. Récipient selon la revendication 34, caractérisé en ce que les extrémités (86 à 88) des branches des rails profilés (76 à 79) sont renflées ou recourbées en forme de V.

36. Récipient selon la revendication 35, caractérisé en ce que les rails profilés (76 à 79) font saillie dans des creux (82 à 84) des bords (80, 81) du couvercle (11i) et/ou des parois latérales (3 à 6).

37. Récipient selon l'une quelconque des revendications 1 à 36, caractérisé en ce qu'au moins une partie, de préférence tous les coins et arêtes du couvercle (11) sont renforcés.

38. Récipient selon la revendication 37, caractérisé en ce que les éléments renforcés (47 à 49 ; 50 à 53 ; 54 à 57 ; 107 à 110 et 111) ont une section approximativement en forme de L.

39. Récipient selon la revendication 38 caractérisé en ce que les éléments renforcés (107 à 111) sont réalisés sous forme de rails en équerre.

40. Récipient selon l'une quelconque des revendications 37 à 39, caractérisé en ce que les éléments renforcés (94 à 97) sont des pièces en équerre posées sur les coins du couvercle (11).

41. Récipient selon l'une quelconque des revendications 37 à 39, caractérisé en ce que les éléments renforcés (111) sont formés par un seul élément de cadre.
